(19) Europäisches Patentamt
European Patent Office
Office européen des brevets

(11) EP 0 282 927 B1

(12) EUROPEAN PATENT SPECIFICATION

(45) Date of publication and mention of the grant of the patent:
**18.06.1997 Bulletin 1997/25**

(51) Int Cl.6: **C08G 77/00**

(21) Application number: **88103922.6**

(22) Date of filing: **11.03.1988**

# (54) Cross-linked organosiloxane polymers

Vernetzte Organosiloxanpolymer

Polymères d'organosiloxane réticulées

(84) Designated Contracting States:
**BE DE ES FR GB IT NL SE**

(30) Priority: **20.03.1987 US 28430**

(43) Date of publication of application:
**21.09.1988 Bulletin 1988/38**

(73) Proprietor: **HERCULES INCORPORATED**
**Wilmington Delaware 19894 (US)**

(72) Inventor: **Cowan, Patrick Joseph**
**Newark Delaware 19711 (US)**

(74) Representative: **Lederer, Franz, Dr. et al**
**Lederer, Keller & Riederer**
**Patentanwälte**
**Prinzregentenstrasse 16**
**80538 München (DE)**

(56) References cited:
**EP-A- 183 382**
**EP-A- 0 204 171**
**WO-A-88/02902**
**FR-A- 2 595 364**
**GB-A- 1 439 945**
**US-A- 3 197 432**
**US-A- 3 838 115**

- **JOURNAL OF POLYMER SCIENCE, POLYMER CHEMISTRY EDITION, vol. 16, 1978, pages 483-490; Y.K. KIM et al.: "Polycycloalkylene-siloxane polymers: Synthesis and thermal study"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention relates to cross-linked or self-cross-linkable poly(organosiloxanes).

A number of organosilicon polymers have been disclosed in the prior art, which are actually vinyl addition polymers modified with silicon-containing moieties. Polymerization takes place in some cases via conventional olefin polymerization routes without making use of the hydrosilation reaction. The silicon-containing moiety is then present as a polymer modifier. Examples of such polymerizations can be found in, e.g., U.S. 3,125,554; U.S. 3,375,236; U.S. 3,838,115; U.S. 3,920,714; and U.S. 3,929,850.

It has been known for quite some time that compounds containing the hydrosilane (i.e., $\equiv$Si-H) functional group can be reacted with alkenes containing vinyl (terminal) unsaturation to form alkyl silanes. The simplest example of this reaction is the addition of ethylene to trichlorosilane to form ethyl trichlorosilane. This exothermic reaction is catalyzed by platinum halide compounds and proceeds readily to virtually 100% conversion.

This reaction, known as the hydrosilation reaction, has been effective with a large number of vinyl compounds. Likewise, other silanes, such as dialkyl silanes, halo-alkyl silanes and alkoxy silanes, have been found to undergo this reaction so long as they possess the requisite $\equiv$Si-H group.

The hydrosilation reaction has been used with difunctional linear siloxanes to build up long chain siloxanes. For example, U.S. 3,410,886 teaches reacting a hydroterminated trisiloxane with a vinyl-terminated trisiloxane to form a linear compound containing six silicon atoms. U.S. 3,220,972 and U.S. 3,271,362 teach that a compound containing both hydrogen-silicon linkages and aliphatic unsaturation can react with itself.

A few instances have been reported in which polymerization takes place via reaction between compounds containing a vinyl silane ( Si-CH=$CH_2$) group and a hydrosilane ( Si-H) group to form cross-linked polymers. Examples of this type of polymer are found in U.S. 3,197,432; U.S. 3,197,433; and U.S. 3,438,936. Each of these patents teaches the preparation of polymers from vinyl alkyl cyclotetrasiloxanes and alkyl cyclotetrasiloxanes containing 2 to 4 silanic hydrogen atoms.

GB 1 439 945 discloses that the platinum catalyzed curing of mixtures of hydroxy-ended diorganopolysiloxanes and organohydrogenpolysiloxanes can be shortened by the addition of a compound containing at least one olefinic double bond.

Linear polycycloalkylene-siloxane polymers are disclosed in FR 2 595 364 and by Y. K. Kim et al. in J. Polym. Sci. Polym. Chem. Edn. 16 (1978) 483. A cross-linking of these polymers is not suggested.

Cross-linked optical siloxane polymers are disclosed in EP-A-O 204 171. Polycyclic polyenes having non-aromatic non-conjugated double bonds are, however, not used for cross-linking.

EP-A-O 183 382 discloses polyorganosiloxane compounds wherein the organic groups are selected from hydrocarbon groups. These polyorganosiloxanes cannot be self-cross-linked by hydrosilation since there are no $\equiv$SiH groups present in the polymer. The polymers are cross-linked by vulcanization reaction between carbon-carbon double bonds containing hydrocarbon groups.

There is need for high molecular weight organosilicon polymers that have outstanding physical, thermal and electrical properties and improved resistance to water. There is also a need for a method of preparing the aforesaid high molecular weight organosilicon polymers and of preparing shaped items therefrom.

According to the invention, a hydrosilation cross-linked or self-cross-linkable organohydrosiloxane polymer having hydrocarbon residues derived from polycyclic polyenes having at least two non-aromatic, non-conjugated carbon-to-carbon double bonds is obtainable by reacting at least 30% of the $\equiv$SiH groups of a linear poly(organohydrosiloxane) with said polycyclic polyenes having at least two non-aromatic, non-conjugated carbon-to-carbon double bonds.

Preferably, the cross-linking units are residues derived from dicyclopentadiene, cyclopentadiene trimer, norbornadiene or dimethanohexahydronaphthalene, and more preferably, the poly(organohydrosiloxane) is a trimethylsiloxy-terminated poly(methylhydrosiloxane). Most preferably, the poly(organohydrosiloxane) has the general formula:

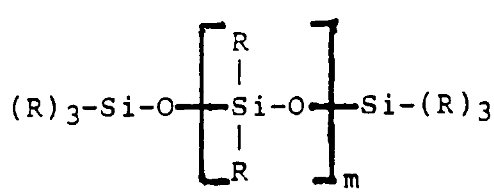

wherein R is a substituted or unsubstituted, saturated alkyl radical or a substituted or unsubstituted phenyl radical, and 5% to 50% of the R's are hydrogen and m is an integer from 5 to 100, and the maximum value of m is desirably 40.

Preferably according to the invention, the poly(organohydrosiloxane) defined by the above the general formula is trimethylsiloxy-terminated methylhydropolysiloxane. Other exemplary poly(organohydrosiloxanes) include:

trimethylsiloxy-terminated dimethylsiloxane-methylhydrosiloxane copolymer,
dimethylsiloxy-terminated dimethylsiloxane-methylhydrosiloxane copolymer,
trimethylsiloxy-terminated methyloctylsiloxane-methylhydro-siloxane copolymer,
dimethylsiloxy-terminated phenylmethylsiloxan-methylhydro-siloxane copolymer,
trimethylsiloxy-terminated methylcyanopropylsiloxane-methylhydrosiloxane copolymer,
trimethylsiloxy-terminated 3,3,3-trifluoropropylmethylsiloxane methylhydrosiloxane copolymer,
trimethylsiloxy-terminated 3-aminopropylmethylsiloxanemethylhydrosiloxane copolymer,
trimethylsiloxy-terminated 2-phenylethylmethylsiloxanemethylhydrosiloxane copolymer, and
trimethylsiloxy-terminated 2-(4-methylphenyl)-ethylmethylsiloxane-methylhydrosiloxane copolymer.

Cross-linking of the poly(organohydrosiloxane) takes place via the hydrosilation reaction with a polycyclic polyene. Two or more carbon-to-carbon double bonds react with a like number of silicon-hydrogen linkages to form the cross-linked product.

Cyclic polyenes that can be employed are polycyclic hydrocarbon compounds having at least two non-aromatic, non-conjugated carbon-to-carbon double bonds. Preferred compounds include cyclopentadiene oligomers such as dicyclopentadiene and cyclopentadiene trimer, methyl dicyclopentadiene, dimethanohexahydronaphthalene, norbornadiene, norbornadiene dimer, and substituted derivatives of any of these. Mixtures of polycyclic polyenes, particularly the cyclopentadiene oligomers, are useful.

Polymerization can be promoted thermally or using well known hydrosilation catalysts, e.g., metal salts and Group VIII elements.

The hydrosilation reaction proceeds readily in the presence of a platinum-containing catalyst. The preferred catalyst, in terms of both reactivity and cost, is chloroplatinic acid ($H_2PtCl_6 \cdot H_2O$). Catalyst concentrations of 0.005 to 0.30%, preferably 0.025 to 0.1%, by weight, based on weight of the polyene monomer, will effect smooth and substantially complete reaction. Other platinum compounds can also be used to advantage in some instances, such as $PtCl_2$. Platinum metal on carbon is also effective for carrying out the reaction at high temperatures. Other useful platinum catalysts are disclosed in, e.g., U.S. 3,220,971; U.S. 3,715,334; U.S. 3,159,662; and U.S. 4,600,484. An exhaustive discussion of the catalysis of hydrosilation can be found in Advances in Organometallic Chemistry, Vol. 17, beginning on page 407.

In one embodiment, to form the cross-linked polymers of this invention, the platinum-containing catalyst and polycyclic polyene are mixed and heated to form a complex, and, then, the complex and the poly(organohydrosiloxane) are combined, and the mixture is heated for a time sufficient for substantially all of the polycyclic polyene to react with silanic hydrogen. In some cases a single heating temperature can be used and maintained until the reaction is driven to substantial completion. This is suitable for lower levels of cross-linking. However, for higher levels of cross-linking, heating is usually carried out in stages. Thus, periodic increases in temperature are effected over time to drive the reaction as the molecular weight increases.

To prepare shaped objects, the reaction can be carried out in a mold, at least up to the point at which sufficient cross-linking has taken place to fix the polymer in the desired shape. Heat treatment can then be continued after removal from the mold in order to drive the reaction to completion.

It is possible to prepare polymers of a wide range of cross-link density within the scope of this invention. Cross-link density is a function of the number of ≡Si-H linkages and the ratio of silane hydrogens to carbon-carbon double bonds in the reaction mix. This ratio can be from 5 to 1 up to 1 to 2.

Properties and physical form of the cross-linked polymers vary with cross-link density. Thus, it has been found possible to prepare tacky solids, elastomeric materials and tough glassy polymers. The tacky solids and elastomeric materials, while they have utility on their own merits, are usually intermediate products that are further polymerized to the tough glassy polymer state by heat treatment to effect further cross-linking.

By selecting appropriate cyclic polyenes, the initial product of the reaction at lower temperatures can be recovered as a flowable, heat-curable polymer, even though the ratio of >C=C< to ≡Si-H is otherwise suitable for cross-linking. Such cyclic polyenes must have chemically distinguishable carbon-carbon double bonds, for instance, by virtue of being more reactive during hyrosilation (more "electron-rich" and less hindered), and therefore include for example cyclopentadiene oligomers such as dicyclopentadiene and cyclopentadiene trimer, and methyl dicyclopentadiene.

Such flowable, heat-curable polymers, analogous to the so-called B-stage resins encountered in other thermoset preparations, can be recovered and stored if desired for curing at a later time. They are stable at room temperature for varying periods of time, but upon reheating to an appropriate temperature, they cure to the same types of polymers as are prepared when complete polymerization is carried out substantially immediately.

The B-stage type polymers can be prepared by heating the reaction mass to 40 to 65°C and maintaining it at that point for several hours, and then interrupting the reaction by removing the heat until such time as it is desired to complete the transition to a cross-linked elastomeric or glassy polymer. The flowable polymers will have 30to 90%, preferably 30 to 60% of the ≡Si-H groups reacted. These B-stage type polymers are generally viscous, flowable liquids at room

temperature. The viscosity of such liquids varies with the degree of $\equiv$Si-H groups reacted. The practitioner can select, for his own purposes, the point at which the polymerization is to be interrupted by monitoring the viscosity build-up.

The unique silicon-containing polymers of this invention have a range of utilities, depending upon their physical form. Tacky solids or the B-stage type liquid materials are useful as tackifiers in pressure sensitive adhesives and as contact adhesives. They are also useful as structural adhesives, curable in situ, to form strong bonds due to a high affinity of the silicones for polar metal or glass surfaces. The elastomeric embodiments make excellent potting compounds for electronic applications since they can be cured in situ and are insensitive to water.

Products that have been polymerized to the tough glassy state are characterized by high physical properties, i.e., high tensile strength and good flex properties.

Thermal properties of these polymers are also outstanding. The cross-link density can be controlled to give a wide range of glass transition temperatures. Thermal stability in air or nitrogen is excellent with usually less than 10% weight loss at 500°C during thermogravimetric analysis. At 1100°C in air or nitrogen, they leave about 50% residue. The polymers are fire resistant. They burn very slowly when subjected to a flame and self-extinguish when the flame is removed.

A particularly striking property of these polymers is their virtually total insensitivity to water. They have been found to be unaffected by boiling water after extended periods. Further cross-linking may be achieved by platinum catalyzed reaction of $\equiv$Si-H with $\equiv$Si-OH. The $\equiv$Si-OH groups are generated by the reaction of $\equiv$Si-H with water so properties can actually improve upon exposure to water.

The tough, glassy polymers are useful in many applications where glass is now employed as, e.g., in water tank liners or in Dewar flasks. The insensitivity of these polymers to water, and their high temperature properties make them ideal for applications of this type. Moreover, the impact resistance of coated glass is significantly better than that of glass so that lined tanks can withstand the rigors of shipment, handling and installation better than glass.

The tough glassy polymers also exhibit the long wearing properties and chemical inertness required for prosthetic devices such as artificial joints. Their high temperature resistance makes them useful as refractory materials and also as ablative materials for, e.g., rocket reentry cones.

A number of options exist for incorporating additives into the polymer. Additives such as fillers and pigments are readily incorporated. Carbon black, vermiculite, mica, wollastonite, calcium carbonate, sand, glass spheres, and glass beads or ground glass are examples of fillers that can be incorporated. Fillers can serve either as reinforcement or as fillers and extenders to reduce the cost of the molded product. When used, fillers can be present in amounts up to about 80%.

Glass or carbon, e.g., graphite fibers are wetted very well by the liquid prepolymer embodiment making the polymers excellent matrix materials for high strength composite structures. Thus a mold containing the requisite staple or continuous filament can be charged with the B-stage type prepolymer and the prepolymer cured to form the desired composite structure. Fiber in fabric form can also be employed. Fiber reinforced composites of the polymers of this invention can contain as much as 80% of fibrous reinforcement, and, when fully cured, typically exhibit extremely high tensile and flexural properties and also excellent impact strength. Other types of fibers, e.g., metal, ceramic or synthetic polymer fibers, can also be used.

Stabilizers and antioxidants are useful to maintain the storage stabilty of the prepolymers and the thermal oxidative stability of the final product.

In the examples that follow, a series of poly(methylhydrosiloxanes) were cross-linked with polycyclic polyenes under the influence of chloroplatinic acid catalyst. The poly(methylhydrosiloxanes) have the general formula:

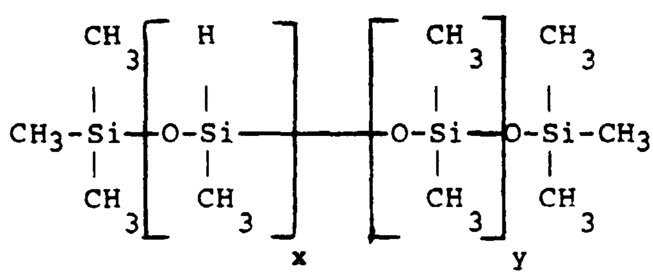

The following polymers were cross-linked:

| Designation | x[a] | y[a] | Formula[b] Weight |
|---|---|---|---|
| PS-1 | 22 | 0 | 1,500 |

(continued)

| Designation | $x^a$ | $y^a$ | Formula[b] Weight |
|---|---|---|---|
| PS-2 | 35 | 0 | 2,270 |
| PS-3 | 6 | 6 | 950 |
| PS-4 | 9 | 17 | 2,000 |
| PS-5 | 5 | 25 | 2,250 |

a) x and y estimated based on data from supplier. b) Approximate formula weight as reported by supplier.

Example 1

A dry, $N_2$ sparged vessel was charged with a stir bar and 0.0113 g of chloroplatinic acid. The vessel was sealed and charged with 13.69 g of norbornadiene. The mixture was stirred for 30 minutes at 50°C. PS-3 (43.46 g) was added and the reaction mixture stirred 16 hours at 50°C. A sample of the viscous, flowable reaction mixture was poured into an aluminum pan and the sample was heated in a nitrogen sparged oven at 150°C for 16 hours, 225°C for 2 hours, 250°C for 2 hours and 280°C for 16 hours. The product was a clear elastomer.

Example 2

Following the general procedure in Example 1, PS-3 (68.63 g) was added to a heated (73°C) mixture of norbornadiene (21.63 g) and chloroplatinic acid (0.0183 g) and the resulting mixture was stirred for 2 hours at 73°C. The reaction mixture was injected into a teflon-coated mold and the mold was placed in a nitrogen sparged oven at 150°C for 16 hours. The clear cross-linked sample was removed from the mold and postcured at 200°C for 2 hours and 280°C for 4 hours to give a clear elastomer.

Example 3

Following the general procedure in Example 1, PS-3 (76.03 g) was added to a heated (70°C) mixture of dicyclopentadiene (34.40 g) and chloroplatinic acid (0.0221 g). The reaction mixture exothermed to 115°C 20 seconds after the PS-3 addition. The mixture was stirred for 5 hours at 100°C and then injected into a teflon-coated mold. The mold was placed in a nitrogen sparged oven and heated 11 hours at 175°C and 24 hours at 200°C. The cross-linked sample was a clear elastomer.

Example 4

Following the general procedure in Example 1, PS-3 (8.71 g) was added to a heated (50°C) mixture of dimethanohexahydronaphthalene (4.71 g) and chloroplatinic acid (0.0027 g). The reaction mixture exothermed to 159°C and set up into a clear elastomer 3 minutes after the PS-3 addition. The elastomer was removed from the reaction vessel and postcured in a nitrogen sparged oven 2 hours at 225°C, 2 hours at 250°C and 16 hours at 280°C. The postcured sample was a clear elastomer.

Example 5

Following the general procedure in Example 1, a solution of PS-3 (19.72 g) in methylene chloride (2 ml) was added to a heated (70 °C) mixture of dimethanohexahydronaphthalene (10.66 g) and chloroplatinic acid (0.0061 g). The reaction mixture exothermed to 153°C and set up into a flexible foam 60 seconds after addition of the PS-3/$Ch_2Cl_2$ addition. The foam was heated for 2 hours at 75°C and removed from the reaction vessel. The foam was then postcured 2 hours at 150°C, 4 hours at 200°C and 4 hours at 280°C to give a white elastomeric foam.

Example 6

Following the general procedure in Example 1, PS-4 (17.5 g) was added to a heated mixture (50°C) of norbornadiene (3.82 g) and chloroplatinic acid (0.0042 g). The reaction mixture was stirred for 16 hours at 50°C. A sample of the reaction mixture was poured into an aluminum pan and cured 16 hours at 150°C, 2 hours at 225°C, 2 hours at 250°C and 16 hours at 280°C. The cross-linked sample was a clear elastomer.

Example 7

Following the general procedure in Example 1, PS-4 (14.23 g) was added to a heated mixture (50°C) of dicyclopentadiene (4.45 g) and chloroplatinic acid (0.0037 g). The reaction mixture was stirred for 16 hours at 50°C. The reaction mixture was poured into an aluminum pan and cured 16 hours at 150°C, 2 hours at 225°C, 2 hours at 250°C and 16 hours at 280°C to give a clear elastomer.

Example 8

Following the general procedure in Example 1, PS-5 (56.8 g) was added to a heated (60°C) mixture of norbornadiene (6.42 g) and chloroplatinic acid (0.0125 g). The reaction mixture was stirred for 16 hours at 60°C. The reaction mixture was poured into an aluminum pan and cured 16 hours at 150°C, 2 hours at 225°C, 2 hours at 250°C and 16 hours at 280°C to give a clear elastomer.

Example 9

Following the general procedure in Example 1, PS-5 (78.09 g) was added to a heated (75°C) mixture of norbornadiene (8.80 g) and chloroplatinic acid (0.0177 g). The reaction mixture was stirred for 2 hours at 75°C and injected into a teflon-coated mold. The mold was placed in a nitrogen sparged oven and heated for 16 hours at 150°C. The clear elastomer was removed from the mold and post cured 4 hours at 200°C to give a clear elastomer.

Example 10

Following the general procedure in Example 1, PS-1 (10.0 g) was added to a heated (60°C) mixture of dicyclopentadiene (9.83 g) and chloroplatinic acid (0.0040 g). The reaction mixture exothermed to 180°C 15 seconds after the PS-1 addition. The mixture was stirred for 2 hours at 60°C, then poured into an aluminum pan. The sample was cured for 40 hours at 150°C, 2 hours at 225°C, 2 hours at 250°C and 16 hours at 280°C to give a hard, glassy clear solid.

Example 11

Following the general procedure in Example 1, PS-1 (48.75 g) was added to a heated (68°C) mixture of dicyclopentadiene (47.91 g) and chloroplatinic acid (0.0196 g). The reaction mixture exothermed to 133°C 20 seconds after the PS-1 addition. The reaction mixture was stirred for 16 hours at 130°C, then injected into a teflon-coated mold and cured for 16 hours at 150°C to give a hard, glassy clear solid.

Example 12

Following the general procedure in Example 1, PS-1 (5.68 g) was added to a heated (75°C) mixture of dimethanohexahydronaphthalene (6.67 g) and chloroplatinic acid (0.0025 g). The reaction mixture exothermed to 200°C and the mixture polymerized to a white elastomer. The sample was removed from the reaction vessel and postcured for 2 hours at 225°C, 2 hours at 250°C and 16 hours at 280°C to give a hard, glassy clear solid.

Example 13

Following the general procedure in Example 1, a solution of PS-1 (7.50 g) in methylene chloride (2 ml) was added to a heated (70°C) mixture of dimethanohexahydronaphthalene (8.80 g) and chloroplatinic acid (0.0033 g). The reaction mixture exothermed to 181°C and set into a white foam 120 seconds after addition of the PS-1/$CH_2Cl_2$ solution. The foam was removed from the reaction vessel and cured for 16 hours at 200°C and 24 hours at 280°C to give a glassy white foam.

Example 14

Following the general procedure in Example 2, PS-2 (9.71 g) was added to a heated (65°C) mixture of norbornadiene (6.91 g) and chloroplatinic acid (0.0033 g). The reaction mixture was stirred for 16 hours at 65°C to give a clear elastomer. The sample was removed from the reaction vessel and cured for 16 hours at 200°C, 2 hours at 225°C, 2 hours at 250°C and 16 hours at 280°C to give a clear glassy solid.

Example 15

Following the general procedure in Example 1, PS-2 (9.71 g) was added to a heated (65°C) mixture of norbornadiene (6.91 g) and chloroplatinic acid (0.0033 g). The reaction mixture was stirred for 2 hours at 65°C and poured into an aluminum pan. The sample was cured for 16 hours at 150°C and 7 hours at 200°C to give a hard, clear, glassy solid.

Example 16

Following the general procedure in Example 1, PS-2 (16.0 g) was added to a heated (65°C) mixture of dicyclopentadiene (16.53 g) and chloroplatinic acid (0.0064 g). The reaction mixture exothermed to 182°C 15 seconds after the PS-2 addition. The reaction mixture was stirred for 16 hours at 55°C and 48 hours at 75°C. The mixture was poured into an aluminum pan and cured for 16 hours at 200°C, 2 hours at 225°C, 2 hours at 250°C and 16 hours at 280°C to give a hard, clear, glassy solid.

Example 17

Following the general procedure in Example 1, PS-2 (76.21 g) was added to a heated (75°C) mixture of dicyclopentadiene (77.90 g) and chloroplatinic acid (0.0317 g). The reaction mixture exothermed to 153°C 70 seconds after the PS-2 addition. The reaction mixture was stirred for 16 hours at 136°C and injected into a teflon-coated mold. The sample was cured for 16 hrs at 280°C to give a hard, clear, glassy solid.

The cross-linked polymers prepared in Examples 1 through 17 were subjected to thermogravimetric analysis in air or nitrogen to determine the temperature at which their thermal weight loss reached 10% and the residue remaining after increasing the temperature to 1100°C at the rate of 20° per minute. Results are recorded in the following Table 1.

Table 1

| Example No. | TGA Atmosphere | 10% Wt. Loss (°C) | % Residue |
|---|---|---|---|
| 1 | $N_2$ | 510 | 68 |
| 2 | Air | 480 | 66 |
| 3 | Air | 490 | 58 |
| 4 | $N_2$ | 500 | 64 |
| 5 | Air | 430 | 58 |
| 6 | $N_2$ | 540 | 63 |
| 7 | $N_2$ | 500 | 62 |
| 8 | $N_2$ | 500 | 52 |
| 9 | Air | 400 | 56 |
| 10 | $N_2$ | 525 | 72 |
| 11 | Air | 520 | 50 |
| 12 | $N_2$ | 510 | 68 |
| 13 | Air | 400 | 54 |
| 14 | $N_2$ | 550 | 75 |
| 15 | Air | 525 | 76 |
| 16 | $N_2$ | 510 | 67 |
| 17 | Air | 525 | 49 |

Example 18

A complex of 0.0190 g of $H_2PtCl_6 \cdot H_2O$ and 48.54 g of dicyclopentadiene was prepared by heating at 170°C under a nitrogen blanket for one hour. PS-2 (47.50 g) was added to the complex at 74°C. The reaction exothermed to 182°C in 12 seconds. The opaque, milky white mixture that resulted was cooled to 30°C and injected into a glass filled plaque mold and cured at 150°C for 17 hours and 200°C for 6 hours. The glass filled plaques were removed from the molds and post cured at 100°C for 0.5 hours, 150°C for 0.5 hours, 200°C for 2 hours, 225°C for 2 hours, 250°C for 2 hours and 280°C for 16 hours.

Example 19

A complex of 0.0379 g of $H_2PtCl_6 \cdot H_2O$ and 94.75 g of dicyclopentadiene was prepared as described in Example 18. PS-2 (72.62 g) was added to the complex at 74°C. The reaction immediately exothermed to 144°C. The opaque, milky white mixture was cooled to 30°C and injected into glass filled molds. The resin was cured as described in Example 18.

Example 20

A complex of 0.0360 g of $H_2PtCl_6 \cdot H_2O$ and 45.99 g of dicyclopentadiene was prepared as described in Example 18. PS-2 (90.00 g) was slowly added to the complex at 72°C. The reaction immediately exothermed to 135°C. The resultant opaque, creamed colored mixture was cooled to 30°C and injected into glass filled molds and cured at 150°C for 15 hours and 200°C for 8 hours. The glass filled plaques were removed from the mold and post cured as described in Example 18.

Physical properties of these glass filled resins are recorded in Table 2.

Table 2

Physical Data

Rheometrics

| Example No. | Wt. % Glass | Tg (C) | G' (GPa) at T (C) 25 | 100 | 140 | 180 | 200 |
|---|---|---|---|---|---|---|---|
| 18 | 55 | 150 | 1.6 | 1.0 | 0.58 | 0.38 | 0.37 |
| 19 | 57 | 124 | 1.4 | 0.84 | 0.56 | 0.52 | 0.54 |
| 20 | 50.6 | 60 | 0.80 | 0.46 | 0.44 | 0.45 | 0.46 |

Mechanical

| Example No. | Wt. % Glass | Flexural Strength Ksi | Flexural Modulus Msi | Tensile Strength Ksi | Tensile Modulus Msi |
|---|---|---|---|---|---|
| 18 | 55 | 24.5 | 1.69 | 18.7 | 1.31 |
| 19 | 57 | 22.8 | 1.70 | 17.0 | 1.09 |
| 20 | 50.6 | 11.5 | 1.25 | 10.6 | 0.819 |

Example 21

Preparation of Catalyst Concentrate

A dry, nitrogen sparged vessel was charged with dicyclopentadiene (17.14 g) and chloroplatinic acid (0.7369 g). The mixture was stirred for one hour at 70°C and filtered through a 0.45 micron filter under a nitrogen atmosphere to give a greenish-brown solution. The platinum concentration was 3500 ppm.

B-Stage Resin Preparation

A dry, nitrogen sparged three neck round bottom flask equipped with a mechanical stirrer, condenser, and a septum inlet was charged with hexane (500 g), dicylclopentadiene (245.20 g), and PS-1 (250.00 g). Catalyst concentrate (3 x 0.26 g) was added to the stirred solution every 2.5 hours. The reaction mixture was stirred for 15 hours (ambient temperature) after the final catalyst addition. Tetramethylethylene diamine (0.13 g) was added to 250 g of the reaction mixture. The resulting solution was stirred for one hour at ambient temperature. The hexane was removed under reduced pressure at 50°C. A sample of the resulting viscous liquid was heated in a nitrogen sparged oven at 150°C

for 2 hours and 250°C for two hours to give a slightly turbid, hard, glassy solid.

Example 22

Peroxide Promoted Cross-linking of B-Staged Resin

A sample of the above resin (10 g) was mixed with Di-Cup R (dicumyl phosphate; available from Hercules Incorporated, Wilmington, Delaware) (0.10 g). The resulting mixture was heated in a vacuum oven for one hour at 50°C to give a clear viscous resin. The resin was heated in a nitrogen sparged oven at 150°C for two hours and 275°C for two hours to give a slightly yellow flexible elastomer.

## Claims

### Claims for the following Contracting States : BE, DE, FR, GB, IT, NL, SE

1. A hydrosilation cross-linked or self-cross-linkable organohydrosiloxane polymer having hydrocarbon residues derived from polycyclic polyenes having at least two non-aromatic, non-conjugated carbon-to-carbon double bonds which is obtainable by reacting at least 30% of the ≡SiH groups of a linear poly(organohydrosiloxane) with said polycyclic polyenes having at least two non-aromatic, non-conjugated carbon-to-carbon double bonds.

2. An organohydrosiloxane polymer as claimed in claim 1, further characterized in that the cross-linking units are residues derived from cyclopentadiene oligomers, methyl dicyclopentadiene, norbornadiene, norbornadiene dimer, dimethanohexahydronaphthalene, or their substituted derivatives.

3. An organohydrosiloxane polymer as claimed in claim 1 or 2, further characterized in that the poly(organohydrosiloxane) is a trimethylsiloxy-terminated poly(methylhydrosiloxane).

4. An organohydrosiloxane polymer as claimed in claim 1 or 2, further characterized in that the poly(organohydrosiloxane) has the general formula:

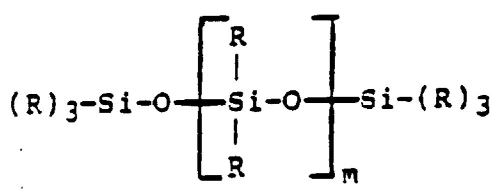

wherein R is a substituted or unsubstituted, saturated alkyl radical or a substituted or unsubstituted phenyl radical, and 5% to 50% of the R's are hydrogen and m is an integer from 5 to 40.

5. An organohydosiloxane polymer as claimed in claim 4 wherein R in the general formula is an unsubstituted alkyl or phenyl radical.

6. An organohydrosiloxane polymer as claimed in claim 4 or 5 wherein R in the general formula is a phenyl radical.

7. An organohydrosiloxane polymer as claimed in claim 4 or 5 wherein the alkyl radical is methyl.

8. An organohydrosiloxane polymer as claimed in any of the preceeding claims, further characterized in that it is a cross-linked, thermoset polymer.

9. An organohydrosiloxane polymer as claimed in claim 1, further characterized in that the polycyclic polyene has chemically distinguishable double bonds and the resultant product is a self-cross-linkable polymer.

10. An organohydrosiloxane polymer as claimed in claim 9, further characterized in that it is a liquid.

**11.** An organohydrosiloxane polymer as claimed in any of the preceeding claims, further characterized in that the poly (organohydrosiloxane) has 30 to 60% of its ≡Si-H groups reacted.

**12.** A method for preparing a hydrosilation cross-linked or ' self-cross-linkable organohydrosiloxane polymer having hydrocarbon residues derived from polycyclic polyenes which comprises reacting at least 30% of the ≡SiH groups of a linear poly(organohydrosiloxane) with a polycyclic polyene having at least two non-aromatic, non-conjugated carbon-to-carbon double bonds at an elevated temperature in the presence of a hydrosilation catalyst.

**13.** A method as Claimed in claim 12, further characterized in that the catalyst is a platinum-containing hydrosilation catalyst.

**14.** A method as claimed in claim 13, further characterized in that the catalyst is chloroplatinic acid.

**15.** A method as claimed in claim 12, further characterized in that the polycyclic polyene is a cyclopentadiene oligomer, methyl dicyclopentadiene, norbornadiene, norbornadiene dimer, dimethanohexahydronaphthalene, or a substituted derivative thereof.

**16.** A method as claimed in claim 12, further characterized in that the poly(organohydrosiloxane) is trimethylsiloxy-terminated (polymethylhydrosiloxane).

**17.** A method as claimed in any of claims 13 to 16, further characterized in that the poly(organohydrosiloxane) has the general formula:

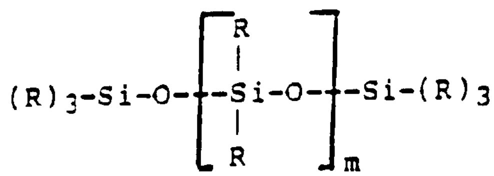

wherein R is a substituted or unsubstituted, saturated alkyl radical or a substituted or unsubstituted phenyl radical, and 5% to 50% of the R's are hydrogen and m is an integer from 5 to 40.

**18.** A method as claimed in claim 17, further characterized in that a platinum-containing catalyst and the polycyclic polyene are combined to form a complex, the complex and the poly(organohydrosiloxane) are reacted to incorporate the polycyclic polyene in the cross-linked or self-cross-linkable product.

**19.** A method as claimed in claim 17 or 18, further characterized in that the reaction is carried out to the extent that 30 to 60% of the ≡Si-H groups are reacted.

**20.** A method as claimed in claim 19, further characterized in that the cross-linkable polymer having 30 to 60% of the ≡Si-R reacted is further reacted to form a cross-linked, thermoset polymer.

**Claims for the following Contracting State : ES**

**1.** A method for preparing a hydrosilation cross-linked or self-cross-linkable organohydrosiloxane polymer having hydrocarbon residues derived from polycyclic polyenes which comprises reacting at least 30% of the ≡SiH groups of a linear poly(organohydrosiloxane) with a polycyclic polyene having at least two non-aromatic, non-conjugated carbon-to-carbon double bonds at an elevated temperature in the presence of a hydrosilation catalyst.

**2.** A method as claimed in claim 1 ,further characterized in that the catalyst is a platinum-containing hydrosilation catalyst.

**3.** A method as claimed in claim 2 , further characterized in that the catalyst is chloroplatinic acid.

**4.** A method as claimed in claim 1, further characterized in that the polycyclic polyene is a cyclopentadiene oligomer,

methyl dicyclopentadiene, norbornadiene, norbornadiene dimer, dimethanohexahydronaphthalene, or a substituted derivative thereof.

**5.** A method as claimed in claim 1 , further characterized in that the poly(organohydrosiloxane) is trimethylsiloxy-terminated (polymethylhydrosiloxane).

**6.** A method as claimed in any of claims 1 to 5 , further characterized in that the poly(organohydrosiloxane) has the general formula:

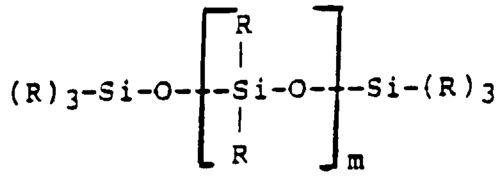

wherein R is a substituted or unsubstituted, saturated alkyl radical or a substituted or unsubstituted phenyl radical, and 5% to 50% of the R's are hydrogen and m is an integer from 5 to 40.

**7.** A method as claimed in claim 6, wherein R in the general formula is an unsubstituted alkyl or phenyl radical.

**8.** A method as claimed in claim 6 or 7 wherein R in the general formula is a phenyl radical.

**9.** A method as claimed in claim 6 or 7 wherein the alkyl radical is methyl.

**10.** A method as claimed in any of the preceeding claims, further characterized in that a cross-linked, thermoset organohydrosiloxane polymer is prepared.

**11.** A method as claimed in claim 1, further characterized in that the polycyclic polyene has chemically distinguishable double bonds and the resultant product is a self-cross-linkable polymer.

**12.** A method as claimed in claim 11, further characterized in that the prepared organohydrosiloxane is a liquid.

**13.** A method as claimed in claim 6, further characterized in that a platinum-containing catalyst and the polycyclic polyene are combined to form a complex, the complex and the poly(organohydrcsiloxane) are reacted to incorporate the polycyclic polyene in the cross-linked or self-cross-linkable product.

**14.** A method as claimed in any of the preceding claims, further characterized in that the reaction is carried out to the extent that 30 to 60% of the ≡Si-H groups are reacted.

**15.** A method as claimed in claim 14, further characterized in that the cross-linkable polymer having 30 to 60% of the ≡Si-R reacted is further reacted to form a cross-linked, thermoset polymer.

**Patentansprüche**

**Patentansprüche für folgende Vertragsstaaten : BE, DE, FR, GB, IT, NL, SE**

**1.** Ein hydrosilylierungsvernetztes oder selbstvernetzbares Organohydrosiloxan-Polymeres mit Kohlenwasserstoffresten, abgeleitet von polycyclischen Polyenen mit zumindest zwei nicht-aromatischen, nicht-konjugierten Kohlenstoff-zu-Kohlenstoff-Doppelbindungen, welches durch Umsetzen von zumindest 30 % der ≡SiH-Gruppen eines linearen Poly(organohydrosiloxans) mit den erwähnten polycyclischen Polyenen mit zumindest zwei nicht-aromatischen, nicht-konjugierten Kohlenstoff-zu-Kohlenstoff-Doppelbindungen, erhältlich ist.

**2.** Ein Organohydrosiloxan-Polymeres nach Anspruch 1, ferner dadurch gekennzeichnet, daß die vernetzenden Einheiten Reste sind, abgeleitet von Cyclopentadien-Oligomeren, Methyldicyclopentadien, Norbornadien, Norbornadien-Dimerem, Dimethanohexahydronaphthalin, oder deren substituierten Derivaten.

**3.** Ein Organohydrosiloxan-Polymeres nach einem der Ansprüche 1 oder 2, ferner dadurch gekennzeichnet, daß das Poly(organohydrosiloxan) ein Trimethylsiloxy-abgeschlossenes Poly(methylhydrosiloxan) ist.

**4.** Ein Organohydrosiloxan-Polymeres nach einem der Ansprüche 1 oder 2, ferner dadurch gekennzeichnet, daß das Poly(organohydrosiloxan) die allgemeine Formel

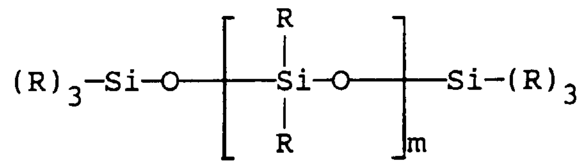

aufweist, worin R ein substituierter oder nichtsubstituierter, gesättigter Alkylrest oder ein substituierter oder nichtsubstituierter Phenylrest ist, und 5 % bis 50 % der Reste Wasserstoff sind und m eine ganze Zahl mit einem Wert von 5 bis 40 ist.

**5.** Ein Organohydrosiloxan-Polymeres nach Anspruch 4, worin R in der allgemeinen Formel ein nichtsubstituierter Alkyl- oder Phenylrest ist.

**6.** Ein Organohydrosiloxan-Polymeres nach einem der Ansprüche 4 oder 5, worin R in der allgemeinen Formel ein Phenylrest ist.

**7.** Ein Organohydrosiloxan-Polymeres nach einem der Ansprüche 4 oder 5, worin der Alkylrest Methyl ist.

**8.** Ein Organohydrosiloxan-Polymeres nach einem der vorstehenden Ansprüche, ferner dadurch gekennzeichnet, daß es ein vernetztes durch Wärme gehärtetes Polymeres ist.

**9.** Ein Organohydrosiloxan-Polymeres nach Anspruch 1, ferner dadurch gekennzeichnet, daß das polycyclische Polyen chemisch unterscheidbare Doppelbindungen aufweist und das resultierende Produkt ein selbstvernetzbares Polymeres ist.

**10.** Ein Organohydrosiloxan-Polymeres nach Anspruch 9, ferner dadurch gekennzeichnet, daß es eine Flüssigkeit ist.

**11.** Ein Organohydrosiloxan-Polymeres nach einem der vorstehenden Ansprüche, ferner dadurch gekennzeichnet, daß das Poly(organohydrosiloxan) 30 bis 60 % seiner ESiH-Gruppen umgesetzt hat.

**12.** Ein Verfahren zur Herstellung eines hydrosilylierungsvernetzten oder selbstvernetzbaren Organohydrosiloxan-Polymeren mit Kohlenwasserstoffresten, abgeleitet von polycyclischen Polyenen, welches das Umsetzen von zumindest 30 % der ≡SiH-Gruppen eines linearen Poly(organohydrosiloxans) mit einem polycyclischen Polyen, das zumindest zwei nicht-aromatische, nicht-konjugierte Kohlenstoff-zu-Kohlenstoff-Doppelbindungen aufweist, bei einer erhöhten Temperatur in Gegenwart eines Hydrosilylierungskatalysators, umfaßt.

**13.** Ein Verfahren nach Anspruch 12, ferner dadurch gekennzeichnet, daß der Katalysator ein Platin-enthaltender Hydrosilylierungskatalysator ist.

**14.** Ein Verfahren nach Anspruch 13, ferner dadurch gekennzeichnet, daß der Katalysator Chloroplatinsäure ist.

**15.** Ein Verfahren nach Anspruch 12, ferner dadurch gekennzeichnet, daß das polycyclische Polyen ein Cyclopentadien-Oligomeres, Methyldicyclopentadien, Norbornadien, Norbornadien-Dimeres, Dimethanohexahydronaphthalin, oder ein substituiertes Derivat derselben ist.

**16.** Ein Verfahren nach Anspruch 12, ferner dadurch gekennzeichnet, daß das Poly(organohydrosiloxan) Trimethylsiloxy-abgeschlossenes (Polymethylhydrosiloxan) ist.

**17.** Ein Verfahren nach einem der Ansprüche 13 bis 16, ferner dadurch gekennzeichnet, daß das Poly(organohydrosiloxan) die allgemeine Formel

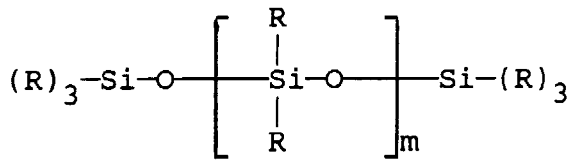

aufweist, worin R ein substituierter oder nichtsubstituierter, gesättigter Alkylrest oder ein substituierter oder nichtsubstituierter Phenylrest ist, und 5 % bis 50 % der R-Reste Wasserstoff sind und m eine ganze Zahl mit einem Wert von 5 bis 40 ist.

**18.** Ein Verfahren nach Anspruch 17, ferner dadurch gekennzeichnet, daß ein Platin-enthaltender Katalysator und das polycyclische Polyen zur Bildung eines Komplexes kombiniert sind, der Komplex und das Poly(organohydrosiloxan) zur Inkorporierung des polycyclischen Polyens in das vernetzte oder selbstvernetzbare Produkt umgesetzt werden.

**19.** Ein Verfahren nach einem der Ansprüche 17 oder 18, ferner dadurch gekennzeichnet, daß die Reaktion bis zu einem Ausmaß durchgeführt wird, daß 30 % bis 60 % der ≡SiH-Gruppen umgesetzt sind.

**20.** Ein Verfahren nach Anspruch 19, ferner dadurch gekennzeichnet, daß das vernetzbare Polymere mit 30 % bis 60 % der umgesetzten ≡SiH-Gruppen ferner zur Bildung eines vernetzten, wärmegehärteten Polymeren umgesetzt wird.

**Patentansprüche für folgenden Vertragsstaat : ES**

**1.** Ein Verfahren zur Herstellung eines hydrosilylierungsvernetzten oder selbstvernetzbaren Organohydrosiloxan-Polymeren mit Kohlenwasserstoffresten, abgeleitet von polycyclischen Polyenen, welches das Umsetzen von zumindest 30 % der ≡SiH-Gruppen eines linearen Poly(organohydrosiloxans) mit einem polycyclischen Polyen, das zumindest zwei nicht-aromatische, nicht-konjugierte Kohlenstoff-zu-Kohlenstoff-Doppelbindungen aufweist, bei einer erhöhten Temperatur in Gegenwart eines Hydrosilylierungskatalysators, umfaßt.

**2.** Ein Verfahren nach Anspruch 1, ferner dadurch gekennzeichnet, daß der Katalysator ein Platin-enthaltender Hydrosilylierungskatalysator ist.

**3.** Ein Verfahren nach Anspruch 2, ferner dadurch gekennzeichnet, daß der Katalysator Chloroplatinsäure ist.

**4.** Ein Verfahren nach Anspruch 1, ferner dadurch gekennzeichnet, daß das polycyclische Polyen ein Cyclopentadien-Oligomeres, Methyldicyclopentadien, Norbornadien, Norbornadien-Dimeres, Dimethanohexahydronaphthalin, oder ein substituiertes Derivat derselben ist.

**5.** Ein Verfahren nach Anspruch 1, ferner dadurch gekennzeichnet, daß das Poly(organohydrosiloxan) Trimethylsiloxy-abgeschlossenes (Polymethylhydrosiloxan) ist.

**6.** Ein Verfahren nach einem der Ansprüche 1 bis 5, ferner dadurch gekennzeichnet, daß das Poly(organohydrosiloxan) die allgemeine Formel

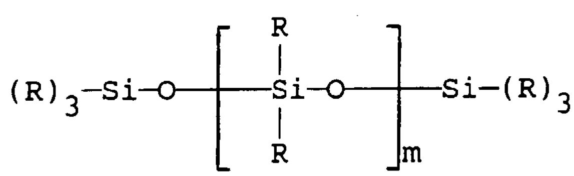

aufweist, worin R ein substituierter oder nichtsubstituierter, gesättigter Alkylrest oder ein substituierter oder nichtsubstituierter Phenylrest ist, und 5 % bis 50 % der R-Reste Wasserstoff sind und m eine ganze Zahl mit einem Wert von 5 bis 40 ist.

**7.** Ein Verfahren nach Anspruch 6, worin R in der allgemeinen Formel ein nichtsubstituierter Alkyl- oder Phenylrest ist.

**8.** Ein Verfahren nach einem der Ansprüche 6 oder 7, worin R in der allgemeinen Formel ein Phenylrest ist.

**9.** Ein Verfahren nach einem der Ansprüche 6 oder 7, worin der Alkylrest Methyl ist.

**10.** Ein Verfahren nach einem der vorstehenden Ansprüche, ferner dadurch gekennzeichnet, daß ein vernetztes, wärmegehärtetes Organohydrosiloxan-Polymeres hergestellt wird.

**11.** Ein Verfahren nach Anspruch 1, ferner dadurch gekennzeichnet, daß das polycyclische Polyen chemisch unterscheidbare Doppelbindungen aufweist und das resultierende Produkt ein selbstvernetzbares Polymeres ist.

**12.** Ein Verfahren nach Anspruch 11, ferner dadurch gekennzeichnet, daß das hergestellte Organohydrosiloxan eine Flüssigkeit ist.

**13.** Ein Verfahren nach Anspruch 6, ferner dadurch gekennzeichnet, daß ein Platin-enthaltender Katalysator und das polycyclische Polyen zur Bildung eines Komplexes kombiniert sind, der Komplex und das Poly(organohydrosiloxan) zur Inkorporierung des polycyclischen Polyens in das vernetzte oder selbstvernetzbare Produkt umgesetzt werden.

**14.** Ein Verfahren nach einem der vorstehenden Ansprüche, ferner dadurch gekennzeichnet, daß die Reaktion bis zu einem Ausmaß durchgeführt wird, daß 30 % bis 60 % der $\equiv$SiH-Gruppen umgesetzt sind.

**15.** Ein Verfahren nach Anspruch 14, ferner dadurch gekennzeichnet, daß das vernetzbare Polymere mit 30 % bis 60 % umgesetzten $\equiv$SiH-Gruppen ferner zur Bildung eines vernetzten, wärmegehärteten Polymeren umgesetzt wird.

## Revendications

### Revendications pour les Etats contractants suivants : DE, BE, FR, GB, IT, NL, SE

**1.** Polymère d'organohydrosiloxane autoréticulable ou réticulé par hydrosilation, possédant des restes d'hydrocarbures dérivés de polyènes polycycliques possédant au moins deux doubles liaisons carbone-à-carbone non conjuguées et non aromatiques, par la réaction d'au moins 30% des radicaux $\equiv$SiH d'un poly(organohydrosiloxane) linéaire avec lesdits polyènes polycycliques possédant au moins deux doubles liaisons carbone-à-carbone non conjuguées et non aromatiques.

**2.** Polymère d'organohydrosiloxane suivant la revendication 1, caractérisé en ce que les unités de réticulation sont des restes dérivés d'oligomères du cyclopentadiène, du méthyldicyclopentadiène, du norbornadiène, du norbornadiène dimérique, du diméthanohexahydronaphtalène, ou de leurs dérivés substitués.

**3.** Polymère d'orqanohydrosiloxane suivant la revendication 1 ou 2, caractérisé en ce que le poly(organohydrosiloxane) est un poly(méthylhydrosiloxane), à terminaison triméthylsiloxy.

**4.** Polymère d'organohydrosiloxane suivant la revendication 1 ou 2, caractérisé en ce que le poly(organohydrosiloxane) répond à la formule générale :

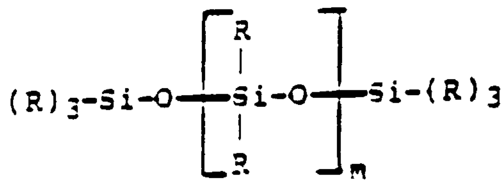

dans laquelle R représente un radical alkyle saturé, substitué ou non substitué, ou un radical phényle, substitué ou non substitué et 5% à 50% des symboles R' représentent des atomes d'hydrogène et m représente un nombre entier dont la valeur varie de 5 à 40.

**5.** Polymère d'organohydrosiloxane suivant la revendication 4, caractérisé en ce que R dans la formule générale représente un groupe phényle ou un groupe alkyle non substitué.

**6.** Polymère d'organohydrosiloxane suivant la revendication 4 ou 5, caractérisé en ce que R dans la formule générale représente un radical phényle.

**7.** Polymère d'organohydrosiloxane suivant la revendication 4 ou 5, caractérisé en ce que le radical alkyle est le groupe méthyle.

**8.** Polymère d'organohydrosiloxane suivant l'une quelconque des revendications précédentes, caractérisé en ce qu'il est un polymère réticulé, thermodurci.

**9.** Polymère d'organohydrosiloxane suivant la revendication 1, caractérisé en ce que le polyène polycyclique comporte des doubles liaisons chimiquement discernables et le produit obtenu est un polymère autoréticulable.

**10.** Polymère d'organohydrosiloxane suivant la revendication 9, caractérisé en ce qu'il est un liquide.

**11.** Polymère d'organohydrosiloxane suivant l'une quelconque des revendications précédentes, caractérisé en ce que le poly(organohydrosiloxane) possède 30 à 60% de ses groupes ≡Si-H, entrés en réaction.

**12.** Procédé de préparation d'un polymère d'organohydrosiloxane autoréticulable ou réticulé par hydrosilation, possédant des restes d'hydrocarbures dérivés de polyènes polycycliques, caractérisé en ce que l'on fait réagir au moins 30% des radicaux ≡SiH, d'un poly(organohydrosiloxane) linéaire avec un polyène polycyclique, possédant au moins deux doubles liaisons carbone-à-carbone, non conjuguées et non aromatiques, à une température élevée et en présence d'un catalyseur d'hydrosilation.

**13.** Procédé suivant la revendication 12, caractérisé en ce que le catalyseur est un catalyseur d'hydrosilation contenant du platine.

**14.** Procédé suivant la revendication 13, caractérisé en ce que le catalyseur est l'acide chloroplatinique.

**15.** Procédé suivant la revendication 12, caractérisé en ce que le polyène polycyclique est un oligomère du cyclopentadiène, du méthyldicyclopentadiéne, du norbornadiène, du norbornadiène dimérique, du diméthanohexahydronaphtalène, ou d'un dérivé substitué d'un tel composé.

**16.** Procédé suivant la revendication 12, caractérisé en ce que le poly(organohydrosiloxane) est du (polyméthylhydrosiloxane), à terminaison triméthylsiloxy.

**17.** Procédé suivant l'une quelconque des revendications 13 à 16, caractérisé en ce que le poly(organohydrosiloxane) répond à la formule :

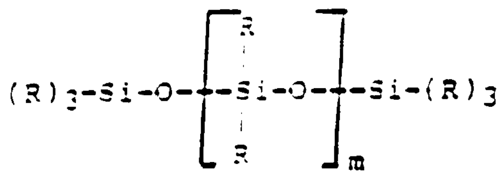

dans laquelle R représente un radical alkyle saturé, substitué ou non substitué, ou un radical phényle, substitué ou non substitué et 5% à 50% des symboles R' représentent des atomes d'hydrogène et m représente un nombre entier dont la valeur varie de 5 à 40.

**18.** Procédé suivant la revendication 17, caractérisé en ce que l'on combine un catalyseur contenant du platine et le polyène polycyclique, pour former un complexe, on fait réagir le complexe et le poly(organohydrosiloxane), pour incorporer le polyène polycyclique au produit autoréticulable ou réticulé.

**19.** Procédé suivant la revendication 17 ou 18, caractérisé en ce que l'on entreprend la réaction jusque dans la mesure où 30 à 60% des radicaux ≡Si-H aient réagi.

**20.** Procédé suivant la revendication 19, caractérisé en ce que le polymère autoréticulable comportant 30 à 60% des radicaux ≡Si-H ayant réagi est amené à réagir davantage, pour former un polymère réticulé, thermodurci.

**Revendications pour l'Etat contractant suivant : ES**

**1.** Procédé de préparation d'un polymère d'organohydrosiloxane autoréticulable ou réticulé par hydrosilation, possédant des restes d'hydrocarbures dérivés de polyènes polycycliques, caractérisé en ce que l'on fait réagir au moins 30% des radicaux ≡SiH, d'un poly(organohydrosiloxane) linéaire avec un polyène polycyclique, possédant au moins deux doubles liaisons carbone-à-carbone, non conjuguées et non aromatiques, à une température élevée et en présence d'un catalyseur d'hydrosilation.

**2.** Procédé suivant la revendication 1, caractérisé en ce que le catalyseur est un catalyseur d'hydrosilation contenant du platine.

**3.** Procédé suivant la revendication 2, caractérisé en ce que le catalyseur est l'acide chloroplatinique.

**4.** Procédé suivant la revendication 1, caractérisé en ce que le polyène polycyclique est un oligomère du cyclopentadiène, du méthyldicyclopentadiène, du norbornadiène, du norbornadiène dimérique, du diméthanohexahydronaphtalène, ou d'un dérivé substitué d'un tel composé.

**5.** Procédé suivant la revendication 1, caractérisé en ce que le poly(organohydrosiloxane) est du (polyméthylhydrosiloxane), à terminaison triméthylsiloxy.

**6.** Procédé suivant l'une quelconque des revendications 1 à 5, caractérisé en ce que le poly(organohydrosiloxane) répond à la formule :

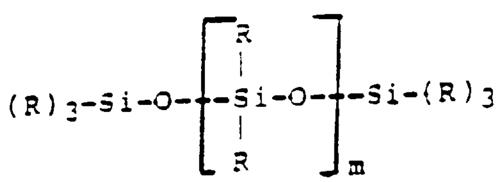

dans laquelle R représente un radical alkyle saturé, substitué ou non substitué, ou un radical phényle, substitué ou non substitué et 5% à 50% des symboles R' représentent des atomes d'hydrogène et m représente un nombre entier dont la valeur varie de 5 à 40.

**7.** Procédé suivant la revendication 6, caractérisé en ce que R dans la formule générale représente un radical phényle ou alkyle non substitué.

**8.** Procédé suivant la revendication 6 ou 7, caractérisé en ce que R dans la formule générale est un radical phényle.

**9.** Procédé suivant la revendication 6 ou 7, caractérisé en ce que le radical alkyle est le groupe méthyle.

**10.** Procédé suivant l'une quelconque des revendications précédentes, caractérisé en ce que l'on prépare un polymère d'organohydrosiloxane réticulé, thermodurci.

**11.** Procédé suivant la revendication 1, caractérisé en ce que le polyène polycyclique possède des doubles liaisons chimiquement discernables et le produit obtenu est un polymère autoréticulable.

**12.** Procédé suivant la revendication 11, caractérisé en ce que l'organohydrosiloxane préparé est un liquide.

**13.** Procédé suivant la revendication 6, caractérisé en ce que l'on combine un catalyseur contenant du platine et le polyène polycyclique, pour former un complexe, on fait réagir le complexe et le poly(organohydrosiloxane), pour incorporer le polyène polycyclique au produit autoréticulable ou réticulé.

**14.** Procédé suivant l'une quelconque des revendications précédentes, caractérisé en ce que l'on entreprend la réaction jusque dans la mesure où 30 à 60% des radicaux ≡Si-H aient réagi.

**15.** Procédé suivant la revendication 14, caractérisé en ce que le polymère autoréticulable comportant 30 à 60% des radicaux ≡Si-H ayant réagi est amené à réagir davantage, pour former un polymère réticulé, thermodurci.